# FASCICULE DE BREVET EUROPEEN

(11) **EP 0 537 406 B1**
(45) Date de publication et mention de la délivrance du brevet: **19.06.1996**
(21) Numéro de dépôt: 91810789.7
(22) Date de dépôt: 14.10.1991
(51) Int. Cl.: B23B 13/02, B23B 13/12

(54) **Tube guide-barres pour tour automatique**
Stangenführungsautomat für Drehautomat
Bar-guiding tube for automatic lathe

(43) Date de publication de la demande: 21.04.1993
(73) Titulaire: SAMECA S.A., CH-2516 Lamboing (CH)
(72) Inventeur: Geiser, Markus, CH-2603 Péry (CH)
(74) Mandataire: AMMANN INGENIEURS-CONSEILS EN PROPRIETE INTELLECTUELLE SA BERNE

(56) Documents cités:
- GB-A- 2 012 232
- US-A- 3 889 822

## Description

La présente invention concerne un tube guide-barres pour tour automatique monobroche et/ou multibroches selon le préambule de la revendication 1 (vois US-A-3 889 822).

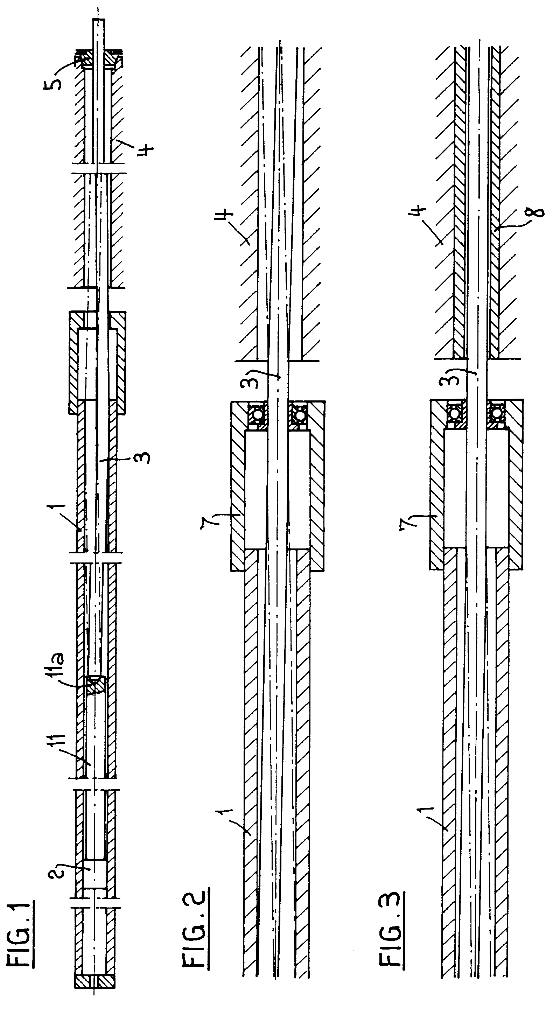

Lors de l'opération d'usinage de barres dans les tours automatiques, ces barres ont tendance à flamber dans les tubes guide-barres et/ou dans la poupée du tour. Ce flambage se produit plus particulièrement aux grandes vitesses de rotation des barres par le fait que celles-ci ont une grande longueur pour un diamètre relativement petit. Le risque de flambage est accentué lorsque la barre est soumise à une poussée en direction de la poupée du tour. En raison de ce flambage (fig.1), la barre 3 se met à flotter dans le tube guide-barres 1 et dans la poupée du tour. Ce flottement de la barre est générateur de balourd et de vibrations qui se transmettent jusque dans la poupée du tour, produisant des inexactitudes dans l'usinage de la barre telles que erreur de concentricité, ovalisation et défauts de l'état de surface des pièces usinées. La fig.1 montre un dispositif dans lequel la barre 3 est libre entre la tête 11a du piston-poussoir 2 et la pince de serrage 5 du tour. C'est le cas le plus défavorable car la longueur de flambage est maximum. La figure 2 montre l'effet d'une lunette de centrage 7 disposée entre la sortie du tube de guidage 1, et l'entrée de la poupée 4. Une telle lunette de centrage fait l'objet du brevet US 4 507 992 du même inventeur. Cette lunette de centrage 7 apporte une amélioration en ce que la barre 3, tenue par la pince du tour et centrée et supportée à l'arrière par le piston-poussoir, est empêchée de flotter à l'endroit de la lunette 7. Dans ce cas, la barre peut cependant encore flotter entre le piston-poussoir 2 et la lunette 7, respectivement entre celle-ci et la pince de serrage du tour.

La solution idéale consisterait à guider la barre sur toute sa longueur dans la poupée du tour par un réducteur de poupée correspondant au diamètre matière et par un tube guide-barres hydrodynamique dont le diamètre intérieur est dimensionné de manière optimale au diamètre de la barre à guider. Une telle solution est cependant difficilement applicable pratiquement, étant donné qu'elle exigerait un tube de guidage pour chaque diamètre et chaque profil de barre à usiner, ce qui engendre des coûts et des temps de mise en train inacceptables dans la pratique.

La fig.3 propose encore une autre amélioration consistant à placer un réducteur de poupée 8 entre lunette de centrage 7 et poupée 4 du tour. Cette manière de faire est présentement utilisée par l'inventeur dans le dispositif faisant l'objet de la demande de brevet européen no. 88810416.3. Ce principe présente l'inconvénient que le piston-poussoir doit être de diamètre égal ou plus petit que celui de la barre à usiner, afin de permettre la pénétration du piston-poussoir au travers de la lunette de centrage et dans le tube réducteur 8 de la poupée 4 du tour. Dans ce cas, la barre 3 avec le piston poussoir peut encore flotter dans le tube de guidage 1 dont le diamètre intérieur est plus grand que celui de la barre respectivement du piston-poussoir.

On connait aussi de la demande publiée allemande 25 33 502, un dispositif guide-barres télescopique, avec un tube extérieur susceptible de coulisser dans un tube fixe du dispositif, une tige de piston-poussoir pouvant coulisser dans le tube extérieur. La tige de piston-poussoir porte à son extrémité frontale une tête venant appuyer contre l'arrière de la barre à usiner pour faire avancer celle-ci en direction de la poupée du tour. Le diamètre de la tête est plus petit que celui de la broche et de la lunette de centrage disposée à l'entrée de la poupée, de sorte que la tête peut pénétrer jusque dans la poupée. Le principe télescopique permet de réduire la dimension longitudinale du dispositif. Cependant, le dispositif selon la document susmentionné est de conception relativement compliquée et onéreuse. La commande de l'avance de la barre à usiner est pneumatique, de sorte qu'il n'est pas prévu de palier hydrodynamique pour supporter la barre, et en conséquence, la vitesse de rotation de celle-ci est limitée.

Le brevet US-A-3 889 822 décrit un dispositif pour diminuer le flambage de la barre à usiner. Lorsque une barre est avancée, une surface d'une languette vient en contact avec une surface d'une plaque d'extension. Une nouvelle avance du piston-poussoir soulève la languette, ce qui dégage un premier colier d'un second colier, ceci permettant au piston-poussoir, à un roulement à billes et au second colier de passer à travers la sortie du tube guide-barres. Pendant ce mouvement, le premier colier supporte le piston-poussoir et prévient ainsi le flambage de celui-ci lorsque le même avance dans l'arrière du tour.

En conséquence la présente invention se propose de trouver un moyen simple et économique permettant d'utiliser un tube guide-barres pouvant recevoir plusieurs diamètres et/ou profils de barres, équippé d'un piston-poussoir dont le diamètre extérieur de la tête est égal ou plus petit que celui de la barre la plus petite à usiner guidée dans ce tube, afin de permettre la pénétration dudit piston-poussoir au travers d'une lunette et dans le réducteur de poupée, tout en garantissant que le poussoir est maintenu sans flottement au centre du tube guide-barres, afin de supporter et centrer la barre lorsque celle-ci est engagée dans le tube guide-barres. Ce problème est résolu par un dispositif tel que décrit dans la revendication 1. La présence d'une bague baladeuse ou baladeur de centrage permet de tenir fermement la partie arrière de la barre à usiner et à empêcher tout flottement du piston-poussoir dans le tube guide-barres et tout flottement de la partie arrière de la barre en contact avec le piston-pousoir.

Une forme d'exécution de l'invention va être décrite plus en détail ci-après à l'aide du dessin dans lequel:
- les figures 1, 2 et 3: montrent des solutions connues de l'état de la technique,
- les figures 4a, 4b et 4c: montrent respectivement une coupe longitudinale, une coupe transversale et le montage d'une bille d'un baladeur de centrage selon l'invention,
- les figures 5, 6, 7 et 8: montrent différents état du baladeur de centrage,
- les figures 9, 10 et 11: montrent différentes positions du piston-poussoir correspondant respectivement aux états des figures 5, 6 et 8.

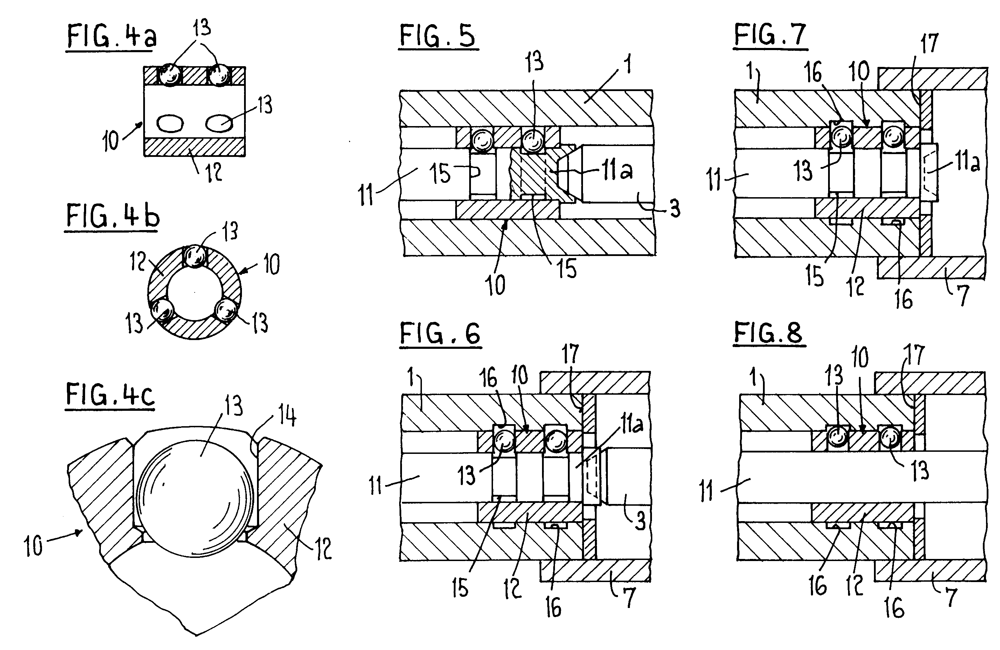

La figure 4 montre le baladeur de centrage en coupe longitudinale (4a), transversale (4b) et le détail du montage d'une bille 13 dans son logement (4c). Le baladeur de centrage 10 comprend un manchon 12 porteur de billes 13 montées dans des forages radiaux du manchon. Les billes peuvent se déplacer librement radiale ment dans les forages 14 du manchon, selon l'axe de ceux-ci. Dans l'exemple illustré, les billes 13 sont réparties en deux groupes de trois dans des plans parallèles. Dans chaque plan, les trois billes sont espacées angulairement de 120°. Cet arrangement correspond à l'exécution préférée, mais il n'est pas limitatif. La figure 4c montre comment la bille 13 est tenue dans son logement avec un jeu selon l'axe du forage 14.

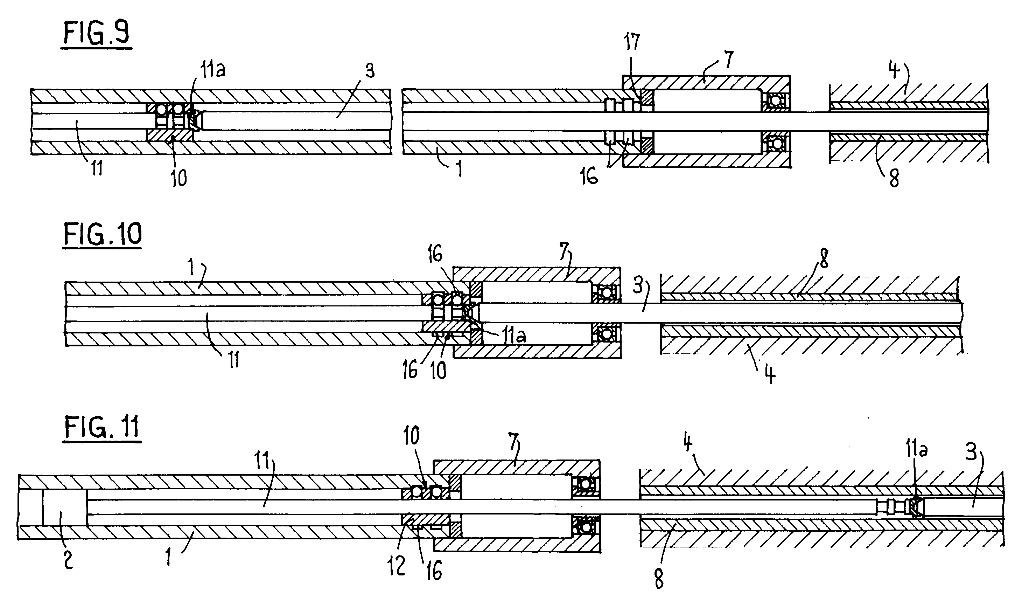

Le baladeur de centrage 10 est prévu pour être monté sur la tige du piston-poussoir 2, ou sur la tête 11a de celui-ci. La figure 5 montre un état du baladeur de centrage dans lequel celui-ci est verrouillé à la tige 11 du piston-poussoir 2, le baladeur pouvant aussi être verrouillé à la tête 11a du piston-poussoir. La figure 9 montre la tige 11 du piston-poussoir 2 qui fait avancer la barre 3 en direction du tour. D'autre part (fig.5), on voit le baladeur de centrage 10 verrouillé à la tige 11 du poussoir 2 par l'intermédiaière des billes 13 engagées dans les gorges 15 à la surface de la tige 11 du poussoir 2. Par ailleurs, la fig.9 montre des gorges 16 à la surface intérieure à l'avant du tube guide-barres. Ces gorges 16 permettent de déverrouiller le baladeur de centrage 10 de la tige 11 du poussoir 2.

La figure 6 (v. aussi fig.10) montre une condition dans laquelle le baladeur de centrage 10 est en contact avec une butée 17 à l'extrémité du tube guide-barres 1. L'avance du piston-poussoir provoque le passage des billes 13 des gorges 15 de la tige 11 du poussoir 2 dans les gorges 16 du tube guide-barres 1. De ce fait, le baladeur de centrage 10 est verrouillé à l'avant du tube guide-barres 1 et la tige du poussoir peut continuer sa course et pénétrer dans la poupée du tour afin de permettre l'avance de la matière jusqu'à l'usinage complet de la barre.

La figure 8 (v. aussi fig.11) montre un état dans lequel le baladeur 10 est solidaire du tube guide-barres 1 et verrouillé à celui-ci par le fait que les billes 13 sont engagées dans les gorges 16 de ce tube.

Lorsque la barre est complètement usinée, on retire le piston-poussoir 2 vers l'arrière du dispositif. Arrivé à la position selon figure 7, la tête de poussoir 11a dont le diamètre extérieur est plus grand que le diamètre intérieur du baladeur de centrage 10, vient appuyer contre ce dernier qui est déverrouillé du tube guide-barres 1 par le fait que les billes 13 passent des gorges 16 du tube guide-barres aux gorges 15 de la tige 11 de poussoir.

Ce qui précède montre que la tête 11a du poussoir 2 est toujours parfaitement centrée par l'intermédiaire du baladeur 10, même lorsque la tête du poussoir est d'un diamètre nettement plus petit que celui du tube guide-barres.

En conséquence, l'arrière de la barre 3 est parfaitement centré par la tête 11a du piston-poussoir 2.

Ceci permet d'une part une augmentation de la plage des diamètres de barres pouvant être acceptés par le tube guide-barres, tout en ayant un poussoir de petit diamètre pouvant pénétrer dans la poupée du tour dont le diamètre a été adapté au diamètre matière par un réducteur de poupée.

D'autre part, le fait de pouvoir centrer parfaitement l'arrière de la barre, de guider celle-ci sur un palier hydrodynamique sur toute la longueur du tube guide-barres, d'avoir une lunette de centrage à l'avant du tube guide-barres et de guider la barre dans la poupée du tour au moyen de réducteurs dimensionnés en fonction du diamètre de la barre permet d'éviter un flottement des barres en rotation, source de balourd et de vibrations et des inconvénients qui en découlent.

Mentionnons encore qu'en pratique, le piston-poussoir est déplacé par pression d'huile et que de l'huile est amenée entre la tige du piston-poussoir et le tube de guidage et entre celui-ci et la barre à usiner, afin de former un palier hydrodynamique supportant la tige du poussoir et la barre à usiner.

## Revendications

1. Tube guide-barres (1) comprenant un piston-poussoir (2) pour produire l'avance d'une barre a usiner (3) en direction du tour, le piston-poussoir (2) étant équipé d'un balladeur de centrage (10) avec des moyens (13) pour le verrouiller à la partie avant du piston-poussoir (2) aussi longtemps que la tête de celui-ci est engagée dans le tube guide-barres (1) et des moyens pour le verrouiller à la partie avant du tube guide-barres lors de la pénétration de la tête du piston-poussoir dans la poupée du tour, caractérisé en ce que lesdits moyens comprennent des billes (13) s'engageant partiellement soit dans des gorges (15) à la face externe du piston-poussoir (2) pour verrouiller le baladaur de centrage (10) avec le piston-poussoir (2), soit dans des gorges (16) à la face interne du tube de guidage (1) pour verrouiller le baladeur de centrage (10) avec le tube guide-barres (1).

2. Tube guide-barres (1) selon la revendication 1, caractérisé en ce que le baladeur de centrage (10) comprend un manchon (14) portant des ouvertures radiales dans lesquelles lesdits billes (13) peuvent se déplacer en direction axiale desdites ouvertures (14).

3. Tube guide-barres (1) selon la revendication 2, caractérisé en ce que les billes (13) sont réparties dans le manchon dans deux plans parallèles qui sont substantiellement perpendiculaires à l'axe dudit manchon, chacun desdits plans comprenant un jeu d'une pluralité de billes qui sont espacées l'une de l'autre angulairement d'une valeur substantiellement égale.

4. Tube guide-barres (1) selon la revendication 3, caractérisé en ce que chacun desdits plans comprend trois billes (13) espacées angulairement de 120°.

5. Tube guide-barres (1) selon la revendication 1, caractérisé en ce que le tube guide-barres (1) contient une partie frontale avec une butée (17) qui retient le baladeur de centrage (10) lorsque la tête (11a) du piston-poussoir (2) pénètre dans la poupée pour faire avancer la barre (3) restante en direction du tour.

6. Tube guide-barres selon la revendication 2, caractérisé en ce que ledit piston-poussoir est retiré par dépression à l'arrière du tube guide-barres (1), le baladeur de centrage (10) étant verrouillé au tube de guidage (1) jusqu'à ce que la tête (11a) du piston-poussoir (2) vienne exercer une pression sur ledit baladeur de centrage (10), pression qui fait passer les billes (13) des gorges (16) du tube de guidage dans les gorges (15) du piston-poussoir afin de libérer le baladeur de centrage du tube guide-barres et de verrouiller le baladeur de centrage (10) sur le piston-poussoir.

7. Tube guide-barres selon l'une des revendications précédentes, caractérisé en ce que l'avance du piston-poussoir en direction de la poupée du tour est produite hydrauliquement et qu'un palier hydrodynamique est prévu d'une part entre la tige du piston-poussoir et la barre d'autre part entre celle-ci et le tube de guidage.

## Claims

1. Guide-bar tube (1), comprising a feed piston (2) in order to feed a bar stock (3) to be machined towards the lathe, said feed piston (2) being provided with a centering traveller (10) having means (13) for locking it to the front portion of said feed piston as long as the head of the latter is engaged in the guide-bar tube (1), and means for locking it to the front portion of the guide-bar tube when the head of said feed piston penetrates into the headstock of the lathe, characterised in that said means comprise balls (13) which engage partially either in grooves (15) in the external surface of said feed piston (2) in order to lock said centering traveller (10) to said feed piston (2), or in grooves (16) in the internal surface of said guide-bar tube (1) in order to lock said centering traveller (10) to the guide-bar tube (1).

2. Guide-bar tube (1) according to claim 1, characterised in that said centering traveller (10) comprises a sleeve (14) having radial openings in which said balls (13) are displaceable in the axial direction of the openings (14).

3. Guide-bar tube (1) according to claim 2, characterised in that said balls (13) are disposed in said sleeve in two parallel planes which are substantially perpendicular to the axis of said sleeve, each of said planes comprising a set of a plurality of balls which are angularly spaced apart at substantially equal values.

4. Guide-bar tube (1) according to claim 3, characterised in that each of said planes comprises three balls (13) which are angularly spaced apart 120°.

5. Guide-bar tube (1) according to claim 1, characterised in that said guide-bar tube (1) comprises a front portion having an abutment (17) retaining said centering traveller (10) when the head portion (11a) of said feed piston (2) penetrates into the headstock in order to feed the remaining bar stock (3) towards the lathe.

6. Guide-bar tube according to claim 2, characterised in that said feed piston is retracted by vacuum to the rear of said guide-bar tube (1), said centering traveller (10) being locked to the guide-bar tube (1) until the head portion (11a) of said feed piston (2) comes to press upon said centering traveller (10), whereby said balls (13) are caused to disengage from the grooves (16) of the guide-bar tube and to engage in the grooves (15) of the feed piston in order to release the centering traveller from the guide-bar tube and to lock said traveller to the feed piston.

7. Guide-bar tube according to one of the preceding claims, characterised in that the advance of said feed piston towards the headstock of the lathe is produced by hydraulic means, and in that a hydrodynamic bearing is provided between the rod of said feed piston and said bar stock, on one hand, and between the latter and said guiding tube, on the other hand.

## Patentansprüche

1. Stangenführungsrohr (1) mit einem Druckkolben (2) für den Vorschub einer zu bearbeitenden Stange (3) in Richtung der Drehmaschine, wobei der Druckkolben (2) einen Zentrierschieber (10) aufweist mit Mitteln (13) zur Verriegelung desselben mit dem Vorderteil des Druckkolbens (2), solange dessen Kopfteil sich im Stangenführungsrohr befindet, und Mitteln zur Verriegelung des Zentrierschiebers (10) mit dem Vorderteil des Stangenführungsrohrs (1) beim Eintritt des Kopfteils des Druckkolbens in den Spindelstock der Drehmaschine, dadurch gekennzeichnet, dass die genannten Mittel Kugeln (13) sind, welche entweder in Nuten (15) auf der Aussenseite des Druckkolbens (2) teilweise eingreifen, um den Zentrierschieber (10) mit dem Druckkolben (2) zu verriegeln, oder in Nuten (16) auf der Innenseite des Führungsrohrs (1), um den Zentrierschieber (10) mit dem Stangenführungsrohr (1) zu verriegeln.

2. Stangenführungsrohr (1) nach Anspruch 1, dadurch gekennzeichnet, dass der Zentrierschieber (10) eine Hülse (14) mit radialen Oeffnungen aufweist, in welchen die Kugeln (13) in Axialrichtung der Oeffnungen (14) beweglich sind.

3. Stangenführungsrohr (1) nach Anspruch 2, dadurch gekennzeichnet, dass die Kugeln (13) in der Hülse in zwei parallelen, im wesentlichen senkrecht zur Achse der Hülse stehenden Ebenen angeordnet sind, wobei die Ebenen jeweils einen Satz mehrerer Kugeln aufweisen, deren gegenseitiger Winkelabstand jeweils im wesentlichen gleich ist.

4. Stangenführungsrohr (1) nach Anspruch 3, dadurch gekennzeichnet, dass die genannten Ebenen jeweils drei Kugeln (13) in einem Winkelabstand von 120° enthalten.

5. Stangenführungsrohr (1) nach Anspruch 1, dadurch gekennzeichnet, dass das Stangenführungsrohr (1) ein Vorderteil mit einem Anschlag (17) aufweist, welcher den Zentrierschieber (10) zurückhält, wenn der Kopfteil (11a) des Druckkolbens (2) in den Spindelstock eintritt, um den Rest der Stange (3) in Richtung der Drehmaschine vorzuschieben.

6. Stangenführungsrohr nach Anspruch 2, dadurch gekennzeichnet, dass der Druckkolben mittels Unterdruck in den hinteren Teil des Stangenführungsrohrs (1) zurückgezogen wird, wobei der Zentrierschieber (10) mit dem Führungsrohr (1) verriegelt bleibt, bis der Kopf (11a) des Druckkolbens (2) auf den Zentrierschieber (10) drückt, wodurch die Kugeln (13) von den Nuten (16) des Führungsrohrs in die Nuten (15) des Druckkolbens gelangen und der Zentrierschieber (10) vom Stangenführungsrohr gelöst und mit dem Druckkolben verriegelt wird.

7. Stangenführungsrohr nach einem der vorstehenden Ansprüche, dadurch gekennzeichnet, dass der Vorschub des Druckkolbens in Richtung des Spindelstocks der Drehmaschine hydraulisch erfolgt, und dass einerseits zwischen der Kolbenstange des Druckkolbens und der zugeführten Stange, andererseits zwischen dieser und dem Führungsrohr ein hydrodynamisches Lager vorgesehen ist.
